## Europäisches Patentamt
## European Patent Office
## Office européen des brevets

(11) Numéro de publication: **0 133 410**
**B1**

(12) # FASCICULE DE BREVET EUROPÉEN

(45) Date de publication du fascicule du brevet:
**12.08.87**

(51) Int. Cl.⁴: **C 07 F 9/50**

(21) Numéro de dépôt: **84420110.3**

(22) Date de dépôt: **28.06.84**

(54) Procédé de préparation de la tri(M-sulfophényl)phosphine.

(30) Priorité: **03.08.83 FR 8312776**

(43) Date de publication de la demande:
**20.02.85 Bulletin 85/8**

(45) Mention de la délivrance du brevet:
**12.08.87 Bulletin 87/33**

(84) Etats contractants désignés:
**AT BE CH DE FR GB IT LI LU NL SE**

(56) Documents cité:
**EP-A-0 107 006**
**FR-A-2 314 910**
**FR-A-2 349 562**

(73) Titulaire: **RHONE- POULENC RECHERCHES, 25 Quai Paul Doumer, F-92408 Courbevoie Cedex (FR)**

(72) Inventeur: **Jenck, Jean, 4, Avenue de la Paix, F-68490 Chalampe (FR)**
Inventeur: **Morel, Didier, 19, Avenue Mermoz, F-69008 Lyon (FR)**

(74) Mandataire: **Varnière- Grange, Monique, RHONE- POULENC INTERSERVICES Service Brevets Chimie Centre de Recherches de Saint- Fons B.P. 62, F-69192 Saint- Fons Cédex (FR)**

## 0 133 410

**Description**

La présente invention concerne un procédé de préparation de la tri(m-sulfophényl)phosphine. La tri(m-sulfophényl)phosphine (dénommée ci-après TPPTS) est un produit connu, essentiellement utilisé comme ligand hydrosoluble permettant de former des complexes avec des métaux de transition, par exemple le rhodium, dans l'eau et ces solutions peuvent être employées notamment comme catalyseur pour la synthèse de composés aldéhydiques par hydroformylation d'oléfines comme cela est écrit dans le brevet français 2 314 910. Une synthèse en est décrite dans le brevet français 2 314 910. A l'exemple 1 de ce brevet, on prépare ce produit sous la forme de son sel de sodium par sulfonation de la triphénylphosphine (dénommée ci-après TPP) par l'oléum à 20 % en poids d'anhydride sulfurique ($SO_3$). On obtient ainsi la triphénylphosphine mono-, di- et trisulfonée (respectivement dénommées ci-après TPPMS, TPPDS et TPPTS) en mélange avec les oxydes de ces trois produits (oxydes respectivement dénommées ci-après OTPPMS, OTPPDS et OTPPTS).

On arrête ensuite la réaction de sulfonation par dilution du milieu réactionnel avec de l'eau. On obtient ainsi un hydrolysat riche en acide sulfurique et comprenant la triphénylphosphine sulfonée sous forme acide.

Pour isoler ce dernier composé sous forme de sel neutre, on neutralise l'hydrolysat, par exemple à la soude, de façon à diminuer par cristallisations successives les anions sulfates sous forme de sulfate de sodium en milieu aqueux, puis on cristallise la triphénylphosphine sulfonée sous forme de son sel de sodium par addition de méthanol et d'éthanol puis évaporation du solvant. Si la sulfonation de la triphénylphosphine est effectuée à 30°C pendant une vingtaine d'heures, on peut isoler, après diverses cristallisations successives, un mélange contenant 80 % en poids de sel de sodium de la tri(sulfophényl)phosphine et 20 % en poids de sel de sodium de l'oxyde de la tri(sulfophényl)phosphine.

Par ailleurs, il a été montré à l'exemple 2 du certificat d'addition 2 349 562 au brevet français 2 314 910 que pour la TPPTS obtenue à l'exemple 2 du brevet principal, la substitution sulfonate est située en position méta.

Une telle méthode de synthèse de la TPPTS présente toutefois des inconvénients. Tout d'abord la neutralisation s'effectue avec une oxydation partielle de la phosphine et cet oxyde est gênant en ce sens qu'il augmente ainsi les quantités de diluant inerte lors de la réaction d'hydroformylation. En outre, la quantité de soude nécessaire à la neutralisation est importante, compte-tenu de la richesse de l'hydrolysat en $H_2SO_4$. Par conséquent, la quantité d'impuretés apportées par la soude est grande. Or, ces impuretés qui se retrouvent ensuite dans le produit final peuvent être gênantes pour la catalyse. Enfin, lors de la réaction de sulfonation, on obtient un mélange de TPPTS, TPPDS et TPPMS très difficiles à séparer.

Dans la FR-A-2 532 318 on décrit un procédé de fabrication de TPPTS similaire à celui décrit dans le brevet français 2 314 910 sauf que l'on extrait, avant neutralisation par la soude, les diverses tri-phénylphosphines sulfonées de l'hydrolysat obtenu après arrêt de la réaction de sulfonation au moyen d'un extractant choisi notamment parmi les esters phosphoniques comme, par exemple, le dibutyl butyl phosphonate ou les esters phosphoriques comme, par exemple, le tributyl phosphate.

Ainsi, à l'exemple 4 de cette demande de brevet, après avoir effectué la sulfonation de la TPP par de l'oléum à 20 % $SO_3$ en poids dans $H_2SO_4$, on obtient, après traitement par l'extractant, un mélange de 72,9 % de TPPTS, 17,1 % de TPPDS et 10 % d'oxydes de triphényl phosphines sulfonées. On voit donc que, lors de l'étape de sulfonation, on forme de la TPPDS.

Il apparaît à l'heure actuelle que, parmi les diverses triarylphosphines sulfonées décrites dans le brevet français 2 214 910 et son certificat d'addition 2 349 562, la TPPTS est le meilleur des ligands pour former un complexe avec le rhodium et que la TPPTS est alors supérieure à la TPPMS et à la TPPDS.

Toutefois, pour que dans son application comme ligand la TPPTS donne les meilleurs résultats, il est nécessaire qu'elle présente une excellente pureté et, en particulier, qu'elle soit exempte de TPPMS, TPPDS (degré d'oxydation du phosphore $P^{III}$) det de OTPPMS, OTPPDS et OTPPTS (degré d'oxydation du phosphore $P^V$).

Le but de la présente invention est donc de proposer un procédé industriel de préparation de la TPPTS qui ne présente plus les inconvénients des procédés connus et qui permette d'obtenir au cours de la première étape de sulfonation une très forte proportion de TPPTS avec le moins possible d'impuretés.

Un autre but de la présente invention est de proposer un procédé industriel de préparation de TPPTS qui permette d'avoir un taux de trisulfonation (degré d'oxydation du phosphore $P^{III}$) le plus élevé possible avec un taux d'oxydation des produits sulfonés très faible (degré d'oxydation du phosphore $P^V$).

Ces buts et d'autres sont atteints par la présente invention qui concerne en effet un procédé de préparation de TPPTS comprenant une sulfonation de la TPP au moyen d'un mélange $H_2SO_4$-$SO_3$, puis une hydrolyse du mélange réactionnel pour arrêter la réaction de sulfonation, ledit procédé étant caractérisé en ce que, en vue d'obtenir un hydrolysat sulfurique très riche en TPPTS, on effectue l'étape de la sulfonation dans les conditions suivantes:.

- la température est comprise entre 15 et 25°C,
- le rapport molaire $SO_3$/TPP est supérieur ou égal à 8,
- la teneur globale en poids de $SO_3$ dans le mélange ($SO_3$ + TPP + $H_2SO_4$) en début de réaction est supérieure ou égale à 33 %.

Pour arrêter la sulfonation on coule de l'eau dans le mélange pour hydrolyser le $SO_3$ en excès en vue d'obtenir un hydrolysat sulfurique très riche en TPPTS, c'est-à-dire contenant, d'une part une très forte teneur, 85 % environ et plus (en % molaire de phosphore) de triphénylphosphine sulfonée ($P^{III}$), dont 99 % (en % molaire de phosphore) au moins est la TPPTS et, d'autre part, une faible teneur, 15 % au plus (en % molaire de

2

phosphore) d'oxydes de triphénylphosphine sulfonée (P$^V$) dont le constituant prépondérant est l'OTPPTS.

La TPPTS peut être extraite de l'hydrolysat par toute méthode connue, par exemple par filtration et lavage par le méthanol, comme décrit à l'exemple 7 du brevet français 2 314 910 ou de préférence au moyen d'une extraction liquide-liquide comme décrit par exemple dans la demande FR-A-2 532 318.

Selon ce dernier procédé, on met en contact l'hydrolysat et l'extractant (phase organique), on sépare une phase organique qui contient la TPPTS et une petite quantité d'acide sulfurique co-extrait et une phase aqueuse ou raffinat qui contient de l'acide sulfurique.

Parmi les extractants préférés, on utilise des alkylphosphates comme, par exemple, le tributylphosphate ou les phosphonates oomme le dibutyl butylphosphonate.

Cette méthode de purification est particulièrement avantageuse car l'impureté principale présente quand on arrête l'étape de sulfonation mise en oeuvre conformément à l'invention, est essentiellement l'OTPPTS. Or, on a pu constater que la majeure partie de l'oxyde de triphénylphosphine sulfoné (OTPPTS) présent dans l'hydrolysat n'est pas extraite par l'extractant organique et reste dans la phase aqueuse.

Il reste ensuite à séparer la TPPTS de la phase organique.

Cette séparation peut se faire par mise en contact de la phase organique avec de l'eau si l'on veut obtenir la TPPTS sous forme d'acide libre, ou avec une solution aqueuse contenant un cation M$^+$ d'origine minérale ou organique si l'on veut obtenir la TPPTS sous une forme salifiée, par exemple au moyen d'une solution de soude.

Il est nécessaire, conformément à l'invention, que la température soit comprise entre 15 et 25°C, de préférence entre 20 et 22°C. Si la température est inférieure à 15°C la cinétique de la réaction de sulfonation est trop faible.

Si la température est supérieure à 25°C environ, on obtient une augmentation très importante de la teneur en oxydes des produits sulfonés.

Il est nécessaire que le rapport molaire SO$_3$/TPP soit égal au moins à 8 et de préférence compris entre 10 et 14, de préférence entre 10 et 12.

Un rapport molaire inférieur à 8 n'entraîne pas la disparition de la TPPMS et de la TPPDS.

La teneur globale en poids de SO$_3$ dans le mélange (SO$_3$ + TPP + H$_2$SO$_4$) appelé ci-après mélange ternaire, doit être au moins égale à 33 % en début de réaction. Une teneur inférieure à 33 %, par exemple 30 % conduirait à des teneurs en TPPMS et TPPDS élevées ou bien nécessiterait un temps de réaction extrêmement long.

La réaction de sulfonation se déroule dans l'acide sulfurique comme solvant et la teneur pondérale d'H$_2$SO$_4$ dans le mélange ternaire est avantageusement supérieure ou égale à 15 % en début de réaction (soit un rapport molaire H$_2$SO$_4$/TPP supérieur ou égal à 2,7) de telle sorte que la viscosité du milieu ne soit pas trop élevée pour que celui-ci reste manipulable.

Selon un mode de mise en oeuvre préféré de l'invention, on dissout au préalable la TPP dans de l'acide sulfurique à raison d'au moins 2,7 moles d'H$_2$SO$_4$ par mole de TPP puis on atteint la teneur en poids requise en SO$_3$ par rapport au mélange ternaire en ajoutant de l'oléum ayant une teneur élevée en SO$_3$ et/ou du SO$_3$ liquide fraîchement distillé.

L'addition d'oléum concentré et/ou de SO$_3$ liquide dans la solution sulfurique s'effectue de préférence à une température voisine de 15°C, puis on porte de préférence le mélange à une température de 20-22°C. La durée de la réaction de sulfonation doit être suffisante pour que la totalité de la TPP de départ soit transformée en TPPTS.

Cette durée dépend essentiellement de la température du mélange réactionnel, de la teneur en SO$_3$ dans le mélange ternaire; cette durée est d'autant plus longue que la température est moins élevée et la teneur en SO$_3$ plus faible. L'homme de l'art est à même de choisir cette durée en fonction de ces paramètres.

Ainsi, pour une température de 22°C et une teneur globale en SO$_3$ dans le mélange ternaire de 50 %, une durée de 46 heures environ est suffisante pour obtenir plus de 99 % en mole de P$^{III}$ de TPPTS. En général, il est souhaitable d'avoir une durée de réaction supérieure à 30 heures, de préférence 40 heures. Toutefois, si la teneur en SO$_3$ est faible et proche de la limite de 33 % environ, cette durée doit être de l'ordre de 75 heures. Par conséquent, on utilise de préférence une teneur pondérale de SO$_3$ dans le mélange ternaire supérieure à 40 % qui ne nécessite que des temps de réaction plus courts, de l'ordre de 45 heures et moins.

EXEMPLE 1:

Dans un réacteur en verre d'un litre, à double enveloppe, équipé d'une agitation mécanique, d'un thermomètre et permettant d'opérer sous atmosphère d'argon, on introduit 80 g d'acide sulfurique à 100 % de pureté (PROLABO).

On refroidit à + 15°C avec un bain d'eau et de glace et sous agitation. On charge lentement à 15°C, 20 g de TPP (76,3 millimoles) en 30 minutes par fractions de 2 g (TPP FLUKA purum 98 % minimum). On obtient alors une solution homogène de TPP dans l'acide sulfurique. Puis, à la température maximale de 15°C, on coule en 30 minutes 112 g d'oléum à 65 % sous bonne agitation (teneur en SO$_3$: 0,91 mole).

Ceci correspond à une charge de SO$_3$, d'H$_2$SO$_4$ et de TPP telle que:

| | | | | |
|---|---|---|---|---|
| - $SO_3$/TPP | = | 12 | molaire | |
| - $SO_3$/($SO_3$ + $H_2SO_4$ + TPP) | = | 34 % | (pondéral) | |
| - $H_2SO_4$/($SO_3$ + $H_2SO_4$ + TPP) | = | 56 % | (pondéral) | |

Puis on élève la température du mélange réactionnel à 22°C que l'on maintient pendant 76 heures.

On abaisse alors la température du bain à 10°C et on coule lentement, tout en maintenant cette température de 10°C, 16,4 g d'eau distillée (0,9 mole) afin de neutraliser le $SO_3$ en excès.

On obtient alors 228,4 g d'une solution dans l'acide sulfurique de TPP sulfonées dont l'analyse des spectres de résonance magnétique nucléaire (RMN) du noyau $^{31}$P sur spectromètre JEOL SX 100 MHZ à la fréquence de 40,26 MHZ donne la composition suivante (en % molaire de P):

| | |
|---|---|
| - TPPTS | : 91 % |
| - Oxydes, essentiellement OTPPTS | : 9 %. |

EXEMPLE 2:

On effectue les mêmes opérations que dans l'exemple 1 sauf que l'on utilise 20 g de TPP (0,076 mole), 36 g $H_2SO_4$ à 100 % et 112 g d'oléum à 65 % (0,91 mole $SO_3$), ce qui correspond à une charge de $SO_3$, d'$H_2SO_4$ et de TPP telle que:

| | | | |
|---|---|---|---|
| - $SO_3$/TPP | = | 12 | (molaire) |
| - $SO_3$/($SO_3$ + $H_2SO_4$ + TPP) | = | 43 % | (pondéral) |
| - $H_2SO_4$/($SO_3$ + $H_2SO_4$ + TPP) | = | 45 % | (pondéral). |

La réaction de sulfonation est mise en oeuvre à 22°C pendant 52 heures.

On arrête cette réaction en ajoutant 16 g d'eau distillée (0,90 mole).

L'analyse par RMN de l'hydrolysat donne (en % molaire de P):

| | |
|---|---|
| - TPPTS | : 88,7 % |
| - oxydes, essentiellement OTPPTS | : 11,3 % |

EXEMPLE 3:

On utilise le même appareillage que dans l'exemple 1. On dissout à 20°C, 14,4 g de TPP (0,055 moles) dans 28,8 g de $H_2SO_4$ à 98,6 %. On obtient alors une solution de TPP dans $H_2SO_4$ dans laquelle on coule en 30 minutes 45,87 g de $SO_3$ (0,573 moles) liquide fraîchement distillé tout en maintenant la température à 15°C ce qui correspond à une charge de $SO_3$, d'$H_2SO_4$ et de TPP telle que:

| | | | |
|---|---|---|---|
| - $SO_3$/TPP | = | 10,4 | (molaire) |
| - $SO_3$/($SO_3$ + $H_2SO_4$ + TPP) | = | 51,5 % | (pondéral) |
| - $H_2SO_4$/($SO_3$ + $H_2SO_4$ + TPP) | = | 32,3 % | (pondéral). |

On laisse la réaction de sulfonation se dérouler à 22°C pendant 46 heures en agitant. puis on hydrolyse le $SO_3$ en excès par addition de 1 g d'eau distillée dans l'oléum maintenu à 15°C. L'analyse par RMN du noyau $^{31}$P de l'hydrolysat donne (en % molaire de P):

| | |
|---|---|
| - TPPTS | : 88 % |
| - oxydes, essentiellement OTPPTS | : 12 % |

EXEMPLE COMPARATIF 4:

En utilisant le même appareillage que dans l'exemple 1, on introduit dans le réacteur 174 g d'oléum à 20 % (0,435 mole de $SO_3$). On ajoute lentement à 15°C en 30 minutes, 10 g de TPP (0,038 mole) par portions de 1 g. On obtient alors une solution homogène qui correspond à une charge de $SO_3$, d'$H_2SO_4$ et de TPP telle que:

| | | | |
|---|---|---|---|
| - $SO_3$/TPP | = | 11,4 | (molaire) |
| - $SO_3$/($SO_3$ + $H_2SO_4$ + TPP) | = | 19 % | (pondéral) |
| - $H_2SO_4$/($SO_3$ + $H_2SO_4$ + TPP) | = | 76 % | (pondéral), |

que l'on porte à 22°C et que l'on maintient à cette température pendant 96 heures.

. On abaisse alors la température à 10°C et on coule lentement tout en maintenant cette température, 7,1 g d'eau distillée (0,4300 mole) afin de neutraliser le $SO_3$ en excès.

On obtient alors 191,8 g d'une solution sulfurique de TPP sulfonée dont l'analyse par RMN du $^{31}$P donne la composition suivante (en % molaire de P).:

4

| - TPPTS | : 75,6 % |
| - TPPDS | : 18,7 % |
| - oxydes, essentiellement OTPPDS et OTPPTS | : 5,6 % |

Les teneurs exprimées en mole % de phosphore de TPPTS obtenues par rapport à l'ensemble des TPP sulfonées non oxydées ($P^{III}$) sont indiquées dans le tableau I, dans lequel X désigne le rapport pondéral $SO_3/(SO_3 + H_2SO_4 + TPP)$.

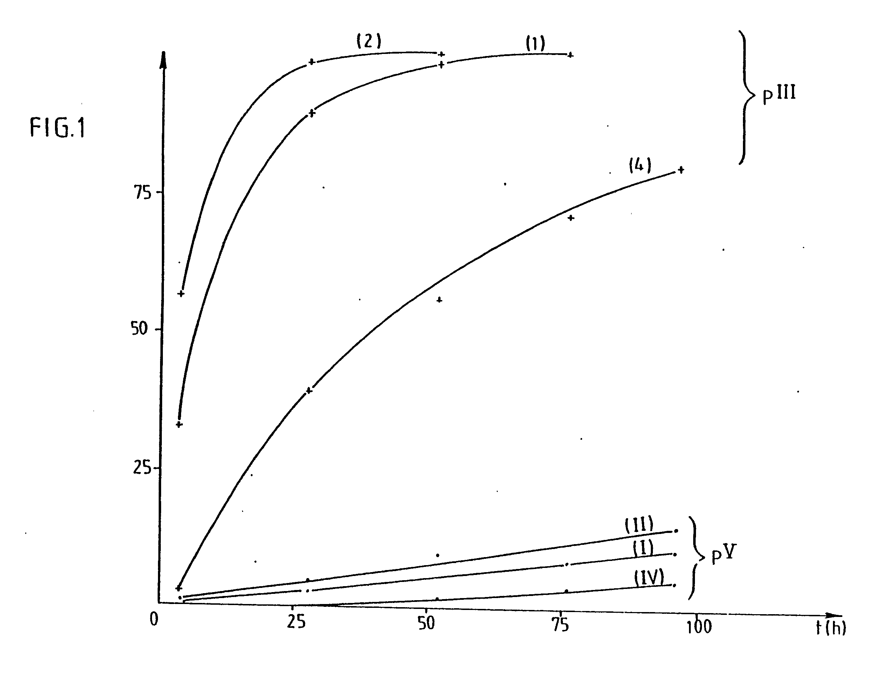

Sur la figure 1 du dessin annexé on a représenté (en ordonnée) les taux d'oxydation ($P^V$) et de trisulfonation ($P^{III}$) en % molaire de phosphore en fonction de la durée en heure de la sulfonation (en abscisse).

Les courbes (1) et (I) ont été obtenues à partir des mesures effectuées au oours de la mise en oeuvre de l'exemple 1, les courbes (2) et (II) ont été obtenues à partir des mesures effectuées au cours de la mise en oeuvre de l'exemple 2 et les courbes (4) et (IV) ont été obtenues à partir des mesures effectuées au cours de la mise en oeuvre de l'exemple comparatif 4.

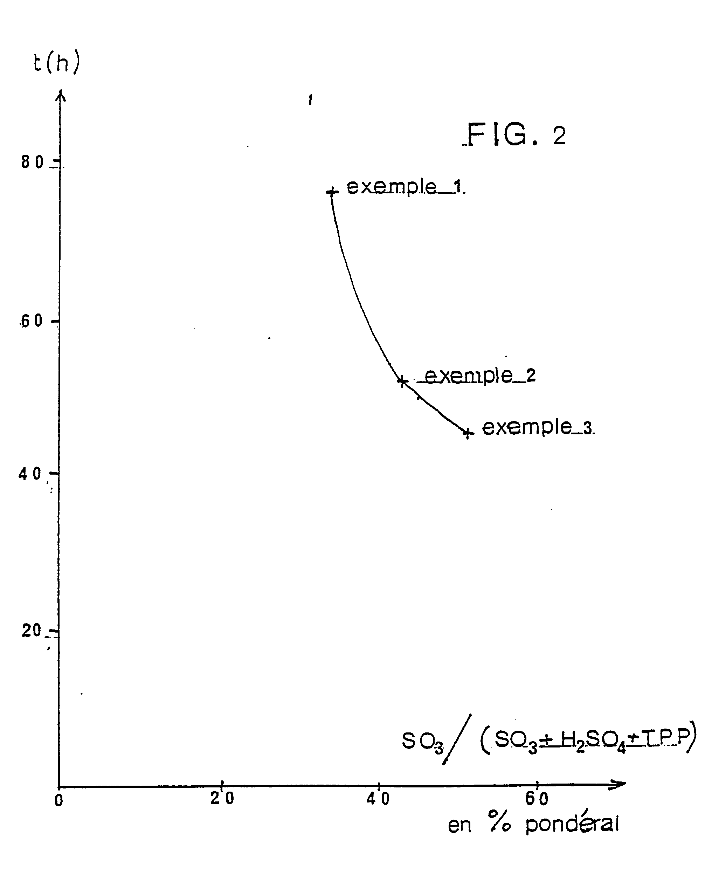

Sur la figure 2 du dessin annexé on a indiqué (en ordonnée) la durée en heure nécessaire pour obtenir une trisulfonation totale en fonction de la teneur pondérale en $SO_3$ chargé par rapport au mélange ternaire [$SO_3 + H_2SO_4 + TPP$] (en abscisse).

**Tableau 1**

| Ex n° | X (%) | Durée en heure | % $P^V$ total (x) | % $P^{III}$ total (x) | dont | |
| --- | --- | --- | --- | --- | --- | --- |
| | | | | | TPPTS (x) % | TPPDS (x) % |
| 1 | 34 | 76 | 9 | 91 | 99 + | 1 − |
| 2 | 43 | 52 | 11,3 | 88,7 | 99 + | 1 − |
| 3 | 51,5 | 45 | 13 | 87 | 99 + | 1 − |

(x): exprimé en mole % de P      + : supérieur à
Rapport molaire: $SO_3/TPP = 12$      - : inférieur à
Température de sulfonation : 22°C.

EXEMPLES COMPARATIFS 5 A 11:
On utilise le même appareillage que dans l'exemple 1, mais les conditions expérimentales et les résultats obtenus sont rassemblés dans le tableau 2 ci-après, dans lequel X a la même signification que dans le tableau 1.

Les exemples comparatifs 5 à 7 démontrent que, si la teneur pondérale en $SO_3$ dans le mélange ternaire est trop faible, il n'est pas possible d'atteindre le but de l'invention (teneur molaire en $P^{III}$ de TPPTS par rapport aux triphénylphosphines sulfonées obtenues supérieure à 99 %).

Les exemples comparatifs 8 et 9 montrent qu'il est nécessaire d'avoir un rapport molaire $SO_3/TPP$ au moins égal à 8, de préférence au moins égal à 10 et les exemples comparatifs 10 et 11 montrent qu'un rapport molaire $SO_3/TPP$ trop faible ne peut pas être compensé par une augmentation de la température de sulfonation.

## TABLEAU 2

| Exemple comparatif | $\frac{SO3}{TPP}$ Rapport molaire | X (%) | Température de la réaction °C | Durée en heure | $P^V$ total | $P^{III}$ total | dont | | |
|---|---|---|---|---|---|---|---|---|---|
| | | | | | | | TPPMS (x) | TPPDS (x) | TPPTS (x) |
| 5 | 12 | 16 | 22 | 192 | 13,9 | 86,1 | 0 | 0 | 0 |
| 6 | 12 | 16 | 26 | 88 | 10,5 | 89,5 | 0 | 14 | 86 |
| 7 | 12 | 16 | 30 | 64,5 | 16,5 | 83,5 | 0 | 12 | 88 |
| 8 | 3,3 | 24,3 | 22 | 44 | 0,5 | 99,5 | NS:11 / 66,5 | 22,5 | 0 |
| 9 | 6,8 | 40,4 | 22 | 44 | 15 | 85 | 0 | 56,5 | 38,7 |
| 10 | 3,2 | 23,4 | 30 | 52 | 2,4 | 97,6 | NS:2,2 / 57,2 | 40 | 0 |
| 11 | 6,3 | 38,3 | 30 | 50 | 14,3 | 85,7 | 10,2 | 85 | 4,8 |

NS : non sulfoné

## Revendications

1. Procédé de préparation de la tri(m-sulfophényl)phosphine (TPPTS) comprenant une sulfonation de la triphénylphosphine (TPP) au moyen d'un mélange d'$H_2SO_4$ - $SO_3$ puis une hydrolyse du mélange réactionnel pour arrêter la réaction de sulfonation, ledit procédé étant caractérisé en ce que en vue d'obtenir un hydrolysat très riche en TPPTS, on effectue l'étape de sulfonation dans les conditions suivantes:
- la température est comprise entre 15 et 25° C,
- le rapport molaire $SO_3$/TPP est supérieur ou égal à 8,
- la teneur en poids de $SO_3$ dans le mélange
  ($SO_3$ + $H_2SO_4$ + TPP) en début de réaction est supérieure ou égale à 33 %.

2. Procédé selon la revendication 1, caractérisé en ce que la teneur pondérale d'$H_2SO_4$ dans le mélange ($SO_3$ + $H_2SO_4$ + TPP) en début de réaction est supérieure ou égale à 15 %.

3. Procédé selon la revendication 1 ou 2, caractérisé en ce que la température est comprise entre 20 et 22° C.

4. Procédé selon la revendication 1, 2 ou 3, caractérisé en ce que le rapport molaire $SO_3$ /TPP est compris entre 10 et 14.

5. Procédé selon l'une quelconque des revendications précédentes, caractérisé en ce que la teneur globale en poids de $SO_3$ dans le mélange ($SO_3$ + $H_2SO_4$ + TPP) en début de réaction est supérieure à 40 %.

6. Procédé selon la revendication 5, caractérisé en ce que la durée de la réaction est au plus de 45 heures.

7. Procédé selon l'une quelconque des revendications précédentes, caractérisé en ce que la TPP de départ est mise en solution dans $H_2SO_4$ pratiquement pur et que le $SO_3$ est rajouté sous forme d'oléum très concentré et/ou sous forme de $SO_3$ liquide.

8. Procédé selon l'une quelconque des revendications précédentes, caractérisé en ce que le pourcentage exprimé en mole de P de TPPTS par rapport à la totalité des triphénylphosphines sulfonées non oxydées contenues dans l'hydrolysat, est d'au moins 99 %.

9. Procédé selon la revendication 8, caractérisé en ce que le pourcentage exprimé en mole de P de TPPTS par rapport à la totalité des triphénylphosphines sulfonées oxydées et non oxydées contenues dans l'hydrolysat est d'au moins 85 %.

10. Procédé selon l'une quelconque des revendications précédentes, caractérisé en ce que la TPPTS est séparée des oxydes contenus dans l'hydrolysat au moyen d'une extraction liquide-liquide.

11. Procédé selon la revendication 10, caractérisé en ce que l'agent extractant est choisi parmi le tributylphosphate ou le dibutyl butylphosphonate.

## Patentansprüche

1. Verfahren zur Herstellung von Tri(m-sulfophenyl)phosphin (TPPTS) mittels Sulfonierung von Triphenylphosphin (TPP) mit einem $H_2SO_4$-$SO_3$-Gemisch und anschließende Hydrolyse des Reaktionsgemisches, um die Sulfonierungsreaktion abzubrechen, dadurch <u>gekennzeichnet</u>, daß man, um ein an TPPTS sehr reiches Hydrolysat zu erhalten, die Sulfonierungsstufe unter folgenden Bedingungen durchführt:
- die Temperatur liegt zwischen 15 und 25° C,
- das Molverhältnis $SO_3$/TPP ist gleich oder größer als 8,
- der Anteil $SO_3$ in dem Gemisch ($SO_3$ + $H_2SO_4$ + TPP) zu Beginn der Reaktion beträgt 33 Gew.-% oder mehr.

2. Verfahren nach Anspruch 1, dadurch <u>gekennzeichnet</u>, daß der Anteil an $H_2SO_4$ in dem Gemisch ($SO_3$ + $H_2SO_4$ + TPP) zu Beginn der Reaktion 15 Gew.-% oder mehr ausmacht.

3. Verfahren nach Anspruch 1 oder 2, dadurch <u>gekennzeichnet</u>, daß die Temperatur 20 bis 22° C beträgt.

4. Verfahren nach Anspruch 1, 2 oder 3, dadurch <u>gekennzeichnet</u>, daß das Molverhältnis $SO_3$/TPP 10 bis 14 beträgt.

5. Verfahren nach einem der vorangehenden Ansprüche, dadurch <u>gekennzeichnet</u>, daß der Gesamtgehalt an $SO_3$ in dem Gemisch ($SO_3$ + $H_2SO_4$ + TPP) zu Beginn der Reaktion mehr als 40 Gew.-% ausmacht.

6. Verfahren nach Anspruch 5, dadurch <u>gekennzeichnet</u>, daß die Reaktionsdauer höchstens 45 Stunden beträgt.

7. Verfahren nach einem der vorangehenden Ansprüche, dadurch <u>gekennzeichnet</u>, daß das TPP, von dem ausgegangen wird, in praktisch reiner $H_2SO_4$ gelöst und das $SO_3$ in Form von stark konzentriertem Oleum und/oder in Form von flüssigem $SO_3$ zugegeben wird.

8. Verfahren nach einem der vorangehenden Ansprüche, dadurch <u>gekennzeichnet</u>, daß der in Mol P des TPPTS angegebene prozentuale Anteil, bezogen auf die gesamten, im Hydrolysat enthaltenen, nicht-oxidierten sulfonierten Triphenylphosphine mindestens 99 % ausmacht.

9. Verfahren nach Anspruch 8, dadurch <u>gekennzeichnet</u>, daß der in Mol P des TPPTS angegebene prozentuale Anteil, bezogen auf die gesamten im Hydrolysat enthaltenen, oxidierten und nicht-oxidierten sulfonierten Triphenylphosphine, mindestens 85 % ausmacht.

10. Verfahren nach einem der vorangehenden Ansprüche, dadurch <u>gekennzeichnet</u>, daß das TPPTS von den im Hydrolysat enthaltenen Oxiden mittels flüssig-flüssig-Extraktion abgetrennt wird.

11. Verfahren nach Anspruch 10, dadurch <u>gekennzeichnet</u>, daß man als Extraktionsmittel Tributylphosphat oder Dibutyl-butylphosphonat wählt.

**0 133 410**

**Claims**

1. Process for the preparation of tri(m-sulphoohenyl)phosphine (TPPTS) comprising a sulphonation of triphenylphosphine (TPP) by means of an $H_2SO_4$-$SO_3$ mixture followed by a hydrolysis of the reaction mixture in order to stop the sulphonation reaction, the said process being characterized in that with a view to obtaining a hydrolysate which is very rich in TPPTS, the sulphonation step is carried out under the following conditions:
- the temperature is between 15 and 25°C,
- the molar radio $SO_3$/TPP is greater than or equal to 8,
- the concentration by weight of $SO_3$ in the ($SO_3$ + $H_2SO_4$ + TPP) mixture in the beginning of the reaction is greater than or equal to 33%.

2. Process according to claim 1, characterized in that the concentration by weight of $H_2SO_4$ in the ($SO_3$ + $H_2SO_4$ +TPP) mixture in the beginning of the reaction is greater than or equal to 15%.

3. Process according to claim 1 or 2, characterized in that the temperature is between 20 and 22°C.

4. Process according to claim 1, 2 or 3, characterized in that the molar ratio $SO_3$/TPP is between 10 and 14.

5. Process according to any one of the preceding claims, characterized in that the overall concentration by weight of $SO_3$ in the ($SO_3$ + $H_2SO_4$ + TPP) mixture in the beginning of the reaction is greater than 40%.

6. Process according to claim 5, characterized in that the period of the reaction is not greater than 45 hours.

7. Process according to any one of the preceding claims, characterized in that the starting TPP is dissolved in practically pure $H_2SO_4$ and in that $SO_3$ is added in the form of a very concentrated oleum and/or in the form of liquid $SO_3$.

8. Process according to any one of the preceding claims, characterized in that the percentage expressed in mole of P of TPPTS relative to the whole of the unoxidized sulphonated triphenylphosphines contained in the hydrolysate is at least 99%.

9. Process according to claim 8, characterized in that the percentage expressed in mole of P of TPPTS relative to the whole of the oxidized and unoxidixed sulphonated triphenylphosphines contained in the hydrolysate is at least 85%.

10. Process according to any one of the preceding claims, characterized in that the TPPTS is separated from the oxides contained in the hydrolysate by means of a liquid-liquid extraction.

11. Process according to claim 10, characterized in that the extractant is chosen from tributyl phosphate or dibutyl butylphosphonate.

8

FIG.1

FIG. 2

t(h)

SO$_3$/(SO$_3$±H$_2$SO$_4$±T.P.P)

en % pondéral